# EUROPÄISCHE PATENTANMELDUNG

(11) **EP 1 790 515 A1**
(43) Veröffentlichungstag der Anmeldung: **30.05.2007**
(21) Anmeldenummer: 05025513.2
(22) Anmeldetag: 23.11.2005
(51) Int. Cl.: B60J 7/043

(54) **Ausstellmechanismus für ein Schiebedach und Fahrzeugdach mit dem Ausstellmechanismus**

(71) Anmelder: ArvinMeritor GmbH, 63128 Dietzenbach (DE)
(72) Erfinder: Grimm, Rainer, 60598 Frankfurt (DE); Röder, Joachim, 63165 Mühlheim (DE); Becher, Thomas, 63110 Rodgau (DE); Böhm, Horst, 60599 Frankfurt/Main (DE); Rieß, Claudia, 64405 Lichtenberg (DE); Roehnke, Manfred, 63322 Roedermark (DE)
(74) Vertreter: Kitzhofer, Thomas

(57) **Zusammenfassung**

Die Erfindung betrifft einen Ausstellmechanismus für ein Schiebedach, mit einer Führungsschiene (18), zwei Hebeln (30, 34), die ein Hebelpaar bilden, und einem Schlitten (24). Jeder Hebel (30, 34) hat ein führungsschienenseitiges und ein deckelseitiges Ende, und beide Hebel (30, 34) sind über eine Verbindungsachse (28) miteinander schwenkbar gekoppelt. Der Schlitten (24) übt beim Verfahren eine vertikale Kraft auf die Verbindungsachse (28) aus und hebt sie an, um dadurch das Hebelpaar in eine Ausstellposition zu bringen. Ferner betrifft die Erfindung ein Fahrzeugdach mit dem Ausstellmechanismus.

## Beschreibung

Die Erfindung betrifft einen Ausstellmechanismus für ein Schiebedach und ferner ein Fahrzeugdach mit dem Ausstellmechanismus.

Fahrzeugschiebedächer haben mindestens einen Deckel, der eine Dachöffnung vollständig oder teilweise freigeben oder eine Lüfterstellung einnehmen kann, indem der Deckel zunächst an seinem hinteren Ende ausgestellt wird.

Aus dem Stand der Technik sind dabei Mechanismen bekannt, die zum Aus-und Verstellen des Deckels mehrere Schlitten verwenden, die in je einer seitlichen Führungsschiene verschiebbar sind. Durch das Zusammenwirken der Schlitten mit der Führungsschiene wird zum einen eine Hubbewegung erzeugt, mittels welcher der entsprechende Deckel nach oben verstellt werden kann, und zum anderen eine Verschiebebewegung. Hierzu werden vor allem Kulissenführungen verwendet. Nachteilig bei diesen Konstruktionen ist der relativ große Bauraum der Schlittenanordnungen in Fahrzeuglängsrichtung sowie der Anordnung von Schlitten, Hebel und Führungsschienen in Vertikalrichtung. Ferner ist durch die Baulänge der Schlitten und Hebel die Öffnungsweite der Dachöffnung in Fahrzeuglängsrichtung bei vollständig verfahrenem Deckel, eingeschränkt, insbesondere wenn der Deckel oberhalb der Dachhaut verfahren wird.

Die Aufgabe der Erfindung besteht darin, einen Ausstellmechanismus für ein Schiebedach zu schaffen, der einfach aufgebaut ist, einen geringen Bauraum benötigt und eine große Öffnungsweite ermöglicht, und ein Fahrzeugdach mit einem solchen Ausstellmechanismus bereitzustellen.

Zu diesem Zweck sieht die Erfindung einen Ausstellmechanismus für ein Schiebedach vor, mit mindestens einer seitlich angeordneten Führungsschiene, zwei Hebeln, die ein Hebelpaar bilden, wobei jeder Hebel ein führungsschienenseitiges und ein deckelseitiges Ende hat und beide Hebel über eine Verbindungsachse miteinander schwenkbar gekoppelt sind, und einem Schlitten, der beim Verfahren eine vertikale Kraft auf die Verbindungsachse ausübt und sie anhebt, um dadurch das Hebelpaar in eine Ausstellposition zu bringen. Ein von einem Antriebsmotor verstellbares Mittel, das beispielsweise ein drucksteif geführtes Kabel ist, greift an dem Schlitten an, so daß der Schlitten entlang der Führungsschiene verschoben wird. Der Schlitten übt beim Verfahren eine vertikale Kraft auf die Verbindungsachse aus, so daß die über diese Verbindungsachse miteinander gekoppelten Hebel in die Ausstellposition gelangen. Die vertikale Kraft greift dabei vorteilhafterweise unmittelbar an der Verbindungsachse an. Für das Ausstellen des Deckels wird nur ein einziger Schlitten benötigt, wodurch ein geringer Bauraum in Fahrzeuglängsrichtung benötigt wird, der sich positiv auf die Öffnungsweite auswirkt.

Vorzugsweise bildet ein Bolzen die Verbindungsachse.

Die Verbindungsachse ist insbesondere an einem ersten Hebel angeordnet, wobei er z.B. drehfest am Hebel befestigt ist.

Der zweite Hebel kann ein gekrümmtes Langloch aufweisen, in das die Verbindungsachse eingreift, und so ein Ausstellen und Absenken des Hebels beim Verfahren des Schlittens ermöglichen, indem eine Kulissenführung zwischen den Hebeln gebildet wird.

Gemäß einer bevorzugten Ausführungsform hat der Schlitten eine Kulisse, in die der Bolzen eingreift. Genausogut könnte ein Zwischenteil mit einer Kulisse an dem Schlitten angebracht sein, in die die Verbindungsachse eingreift.

Zur lagesicheren Halterung des Ausstellmechanismus im geschlossenen Zustand des Schiebedachs ist an einem fahrzeugseitigen Ende eines Hebels eine Lagefixiereinrichtung vorgesehen. Diese ist wahlweise mit einem fahrzeugfesten Teil, insbesondere der Führungsschiene koppelbar. Im gekoppelten Zustand lassen sich der zugeordnete Hebel und der Ausstellmechanismus gar nicht mehr oder nicht mehr wesentlich verschieben. Wie bereits erläutert wird das fahrzeugseitige Ende des Hebels und der gesamte Ausstellmechanismus durch die Lagefixiereinrichtung zeitweise (zumindest in der geschlossenen Position) lagefixiert.

Die Lagefixiereinrichtung wird über einen Kopplungsmechanismus vom Schlitten entkoppelt oder an den Schlitten angekoppelt, um mit dem Schlitten verfahren werden zu können bzw. am fahrzeugfesten Teil angreifen zu können.

Der Kopplungsmechanismus hat bevorzugt einen Kopplungszapfen und eine Kopplungsklinke.

Gemäß einer Ausführungsform ist der Kopplungszapfen einem Hebel des Hebelpaares zugeordnet und die Kopplungskulisse am Schlitten vorgesehen. Die Kopplungskulisse greift insbesondere beim Ausstellen des Deckels und beim weiteren Öffnen der Dachöffnung am Kopplungszapfen des Hebels an, wobei der Hebel an den Schlitten angekoppelt und zusammen mit dem zweiten Hebel entlang der Führungsschiene von dem Schlitten verfahren wird.

Vorzugsweise ist der Kopplungszapfen über eine Blattfeder mit einem Hebel des Hebelpaares verbunden. Der Kopplungszapfen befindet sich bei geschlossenem Deckel und in der Lüfterstellung in einer Aussparung der Führungsschiene. Die Kopplungskulisse am Schlitten greift beim Verfahren des Schlittens am Kopplungszapfen an und bewegt diesen aus der Aussparung, d.h. sie entriegelt ihn. Beim weiteren Verfahren des Schlittens werden dann beide Hebel verfahren und beim Schließen des Deckels wird der Kopplungszapfen von der Blattfeder in die Aussparung der Führungsschiene hinein beaufschlagt, um den Ausstellmechanismus und den Deckel lagezufixieren.

Jeder Hebel hat bevorzugt an seinem deckelseitigen Ende einen gabelförmigen Abschnitt, der an einem Deckel angreift. Der gabelförmige Abschnitt und z.B. eine am Deckel angebrachte Rippe haben eine Öffnung, in die ein Stift eingreifen kann, so daß beide Hebel stabil und gelenkig am Deckel befestigt werden. Alternativ wäre es auch denkbar, den Deckel mit den Hebeln zu verschrauben.

Jeder Hebel kann an seinem führungsschienenseitigen Ende ein Führungselement aufweisen, wobei jedes Führungselement in der Führungsschiene verschiebbar ist. Die Hebel sind über die Führungselemente an der Führungsschiene gelagert.

Das Schiebedach ist insbesondere ein Spoilerdach. Bei einem Spoilerdach wird der Deckel über ein feststehendes Dachteil des Fahrzeugdaches verschoben. Genausogut könnte das Schiebedach ein Schiebehebedach sein, bei dem der Dekkel unter das feststehende Dachteil verschoben wird.

Die Erfindung betrifft ferner ein Fahrzeugdach mit einem erfindungsgemäßen Ausstellmechanismus, wobei eine Dachöffnung vorgesehen ist, die ein Deckel öffnen oder schließen kann und die eine Längsseite hat, entlang der der Schlitten beim Öffnen und Schließen der Dachöffnung verfahren wird, wobei der Schlitten nur zwischen quer zur Längsachse verlaufenden Rändern verfahren wird. Der Schlitten wird also entlang der Ränder der Dachöffnung, die parallel zur Längsachse des Fahrzeugs sind, und nur über die Länge dieser Ränder verfahren, d.h. der Schlitten wird nicht unter das feststehende Dachteil verschoben, das die Dachöffnung umgibt.

Vorzugsweise liegt der Schlitten im wesentlichen nur innerhalb der durch einen umlaufenden Rand begrenzten Dachöffnung, was eine Montage der kompletten Spoilerdacheinheit von oben ermöglicht. Dadurch erhöht sich die Kopffreiheit für den Insassen.

Gemäß einer bevorzugten Ausführungsform liegt auch die Führungsschiene innerhalb der durch einen umlaufenden Rand begrenzten Dachöffnung, was ebenfalls die Kopffreiheit für einen Fahrzeuginsassen vergrößert.

Weitere Merkmale und Vorteile der Erfindung ergeben sich aus der nachfolgenden Beschreibung und den Zeichnungen. Die Erfindung wird nachfolgend anhand einer Ausführungsform beschrieben. In den Zeichnungen zeigen:
- Figur 1 eine schematische Perspektivansicht eines erfindungsgemäßen Fahrzeugdachs mit einem erfindungsgemäßen Ausstellmechanismus für ein Schiebedach;
- Figur 2 eine schematische Ansicht des erfindungsgemäßen Fahrzeugdachs mit erfindungsgemäßen Ausstellmechanismus mit einem Deckel in der geschlossenen Stellung;
- Figur 3 eine schematische Ansicht des Fahrzeugdachs mit Ausstellmechanismus gemäß Figur 2 ohne Schlitten;
- Figur 4 eine schematische Ansicht des Fahrzeugdachs mit Ausstellmechanismus mit einem Deckel in der Lüfterstellung;
- Figur 5 eine schematische Ansicht des Fahrzeugdachs mit Ausstellmechanismus gemäß Figur 4 ohne Schlitten;
- Figur 6 eine schematische Ansicht des Fahrzeugdachs mit Ausstellmechanismus mit einem Deckel in der geöffneten Stellung;
- Figur 7 eine perspektivische Teilansicht des erfindungsgemäßen Ausstellmechanismus für einen Deckel in der Lüfterstellung;
- Figur 8 eine seitliche Prinzipskizze des Ausstellmechanismus gemäß Figur 7;
- Figur 9 eine perspektivische Ansicht des Schlittens des erfindungsgemäßen Ausstellmechanismus;
- Figur 10 eine perspektivische Ansicht eines Hebels des Ausstellmechanismus nach Figur 7;

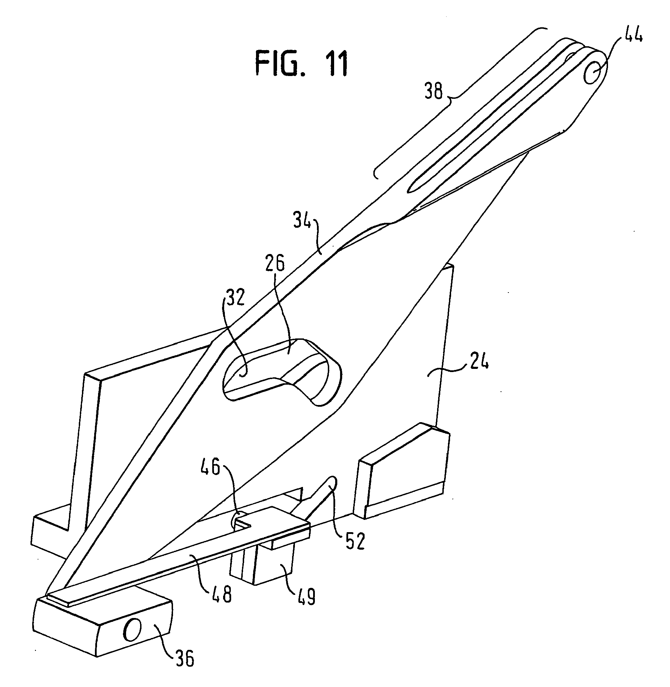

- Figur 11 eine perspektivische Ansicht des Schlittens und des Hebels des erfindungsgemäßen Ausstellmechanismus; und

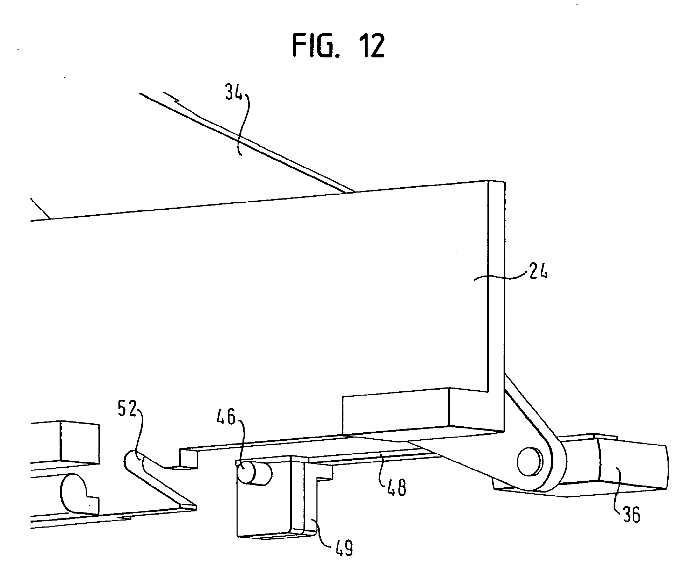

- Figur 12 eine perspektivische Ansicht des Schlittens und des Hebels des erfindungsgemäßen Ausstellmechanismus.

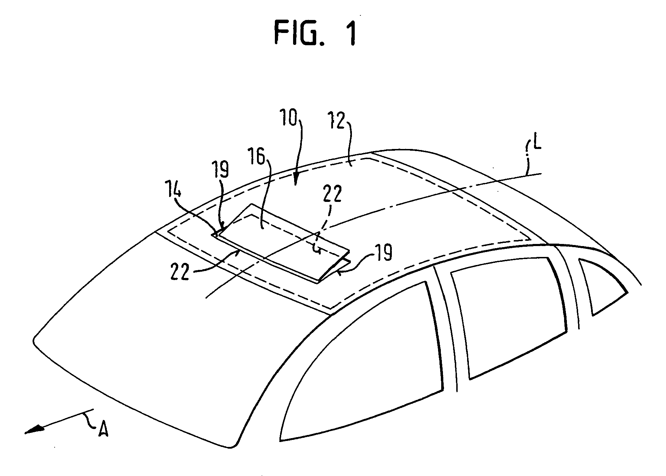

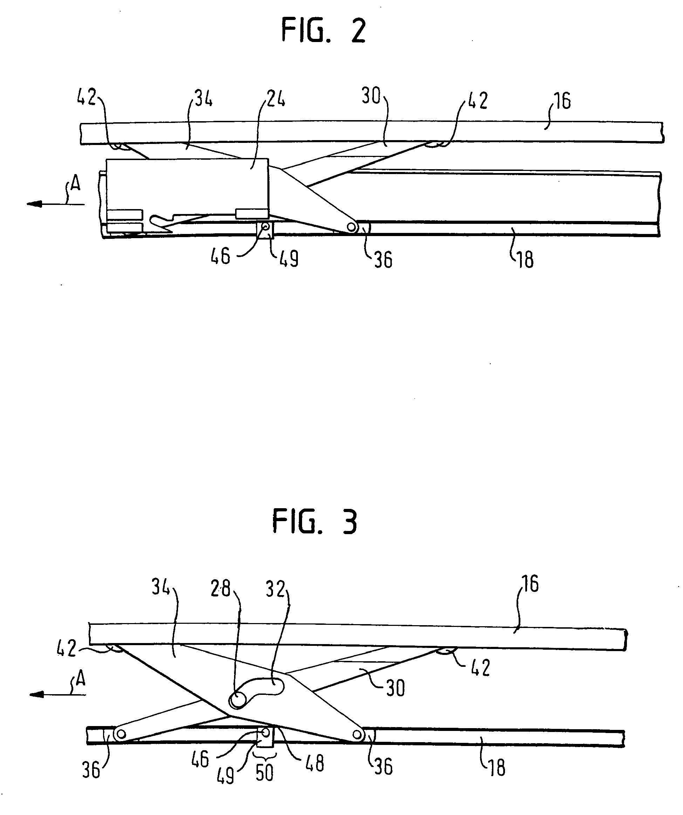

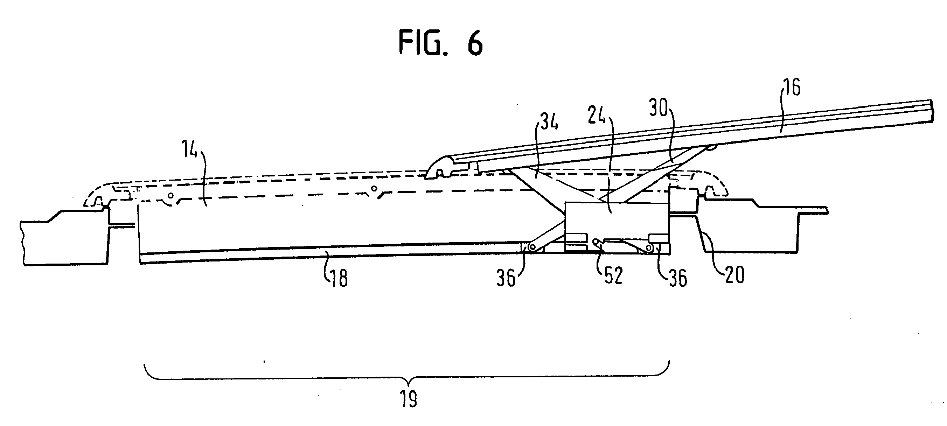

In Figur 1 ist schematisch ein Fahrzeugdach 10 gezeigt, welches ein feststehendes Dachteil 12 aufweist, in dem eine Dachöffnung 14 vorgesehen ist, die durch einen Deckel 16 aus einem optisch transparenten oder aus einem lichtundurchlässigen Material geschlossen (vgl. Figuren 2 und 3) oder geöffnet (vgl. Figur 6) werden kann. In den Figuren 1, 4 und 5 ist der Deckel 16 in einer Lüfterstellung gezeigt, bei welcher der Deckel 16 an seinem hinteren Ende ausgestellt ist.

Bei dem gezeigten Fahrzeugdach 10 handelt es sich um ein Schiebedach, insbesondere ein Spoilerdach, bei dem der Deckel 16 über das feststehende Dachteil 12 verfahren wird. Das Fahrzeugdach 10 könnte auch mit einem Schiebehebedach ausgeführt sein, wobei dann der Deckel 16 unter das feststehende Dachteil 12 verfahren werden würde (nicht gezeigt).

Ein Ausstellmechanismus für den Deckel 16 hat an beiden Seiten der Dachöffnung 14 je eine Führungsschiene 18 (Figuren 1 bis 6), die an dem die Dachöffnung 14 umgebenden, feststehenden Dachteil 12 befestigt sind und sich entlang der Längsseiten 19 der Dachöffnung 14 erstrecken, welche parallel zur Fahrzeuglängsachse L verlaufen. Die Führungsschienen 18 liegen nur zwischen denjenigen Rändern 22 der Dachöffnung 14, die quer zur Fahrzeuglängsachse L des Fahrzeugs verlaufen (siehe insbesondere Figur 6).

Jede Führungsschiene 18 ragt dabei, wie insbesondere aus Figur 6 ersichtlich wird, nicht in einen Fahrzeuginnenraum eines Fahrzeugs, sondern liegt höhenmäßig im Bereich eines umlaufenden Randes 20, der die Dachöffnung 14 begrenzt und um diese umläuft, wodurch eine Montage der Spoilerdacheinheit von oben und eine große Kopffreiheit für einen Fahrzeuginsassen ermöglicht wird.

In jeder Führungsschiene 18 ist ein Schlitten 24 verschiebbar angebracht, an dem ein (nicht dargestelltes) Verstellmittel angreift, beispielsweise ein drucksteif geführtes Antriebskabel, das in an sich bekannter Weise von einem Antriebsmotor verstellt werden kann. Auf diese Weise kann der Schlitten 24 translatorisch entlang der Führungsschiene 18 verschoben werden, wobei er aufgrund der Lage der Führungsschiene 18 nicht unter das Dachteil 12 verfahren wird.

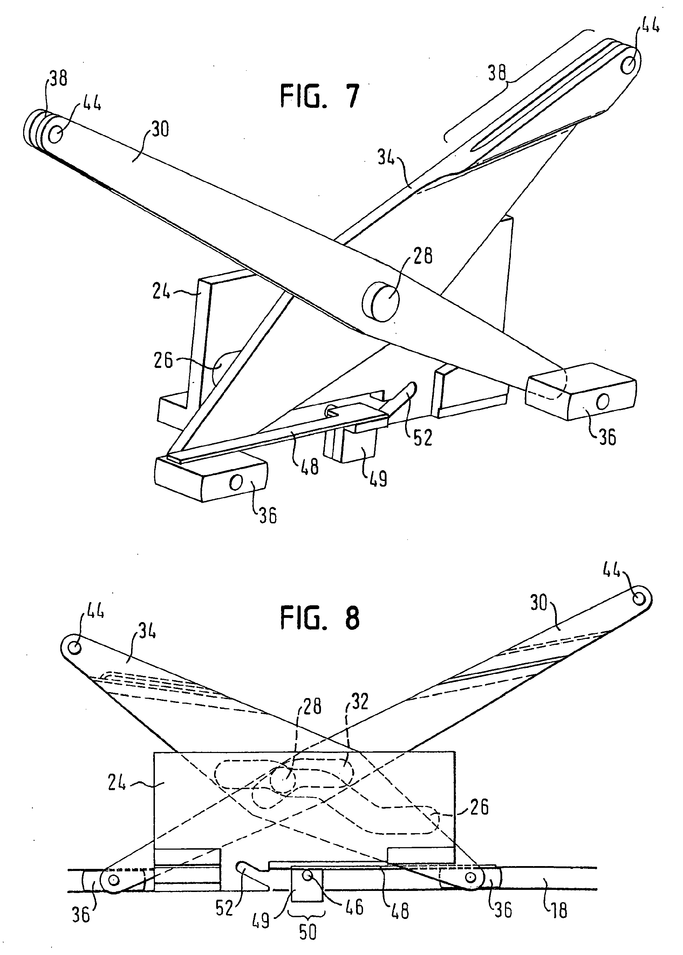

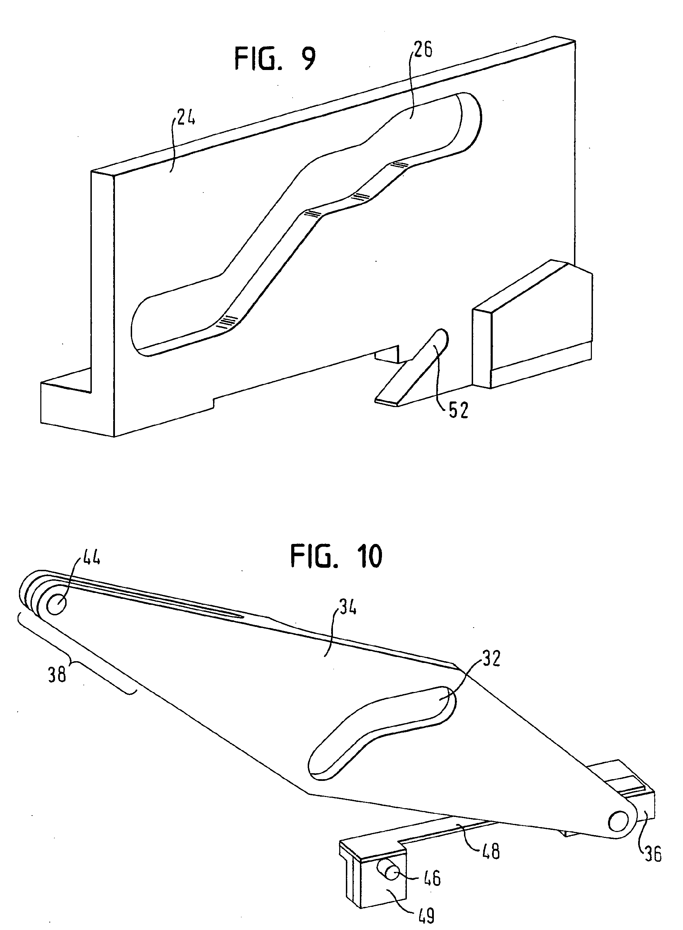

An der Seite des Schlittens 24, die dem Rand 19 der Dachöffnung 14 abgewandt ist, ist eine Kulisse 26 (Figuren 8 und 9) ausgeformt. Die Kulisse 26 erstreckt sich, in Fahrtrichtung A betrachtet, zunächst parallel zur Richtung der Führungsschiene 18, dann um einen kleinen Betrag nach unten, dann wieder parallel zur Richtung der Führungsschiene 18, weiter schräg absteigend und schließlich parallel zur Führungsschiene 18.

Neben der Führungsschiene 18 und dem Schlitten 24 umfaßt der Ausstellmechanismus zwei Hebel 30, 34, die ein Scherengestänge bilden. In die Kulisse 26 greift eine Verbindungsachse 28 in Form eines Bolzens ein, die an den ersten Hebel 30 drehfest angebracht ist. Die Verbindungsachse 28 greift durch ein gekrümmtes Langloch 32 des zweiten Hebels 34 und koppelt die beiden Hebel 30, 34 schwenkbar aneinander. Da die Verbindungsachse 28 in die Kulisse 26 eingreift, übt der Schlitten 24 beim Verfahren eine vertikale Kraft unmittelbar auf die beiden Hebel 30, 34 aus.

Beide Hebel 30, 34 sind an ihrem führungsseitigen Ende schwenkbar an einem Führungselement 36 (Gleiter) angebracht, wobei jedes Führungselement 36 in der Führungsschiene 18 verschiebbar ist. Die beiden Hebel 30, 34 sind scherenartig miteinander gekoppelt, wobei das Führungselement 36 des ersten Hebels 30, der die Verbindungsachse 28 trägt, in Fahrtrichtung A vorne liegt.

An ihrem deckelseitigen Ende haben die beiden Hebel 30, 34 einen gabelförmigen Abschnitt 38, mittels dem sie an einer jeweiligen Rippe 42 des Deckels 16 angreifen. Ein Stift 44 oder Schraube befestigt die Hebel 30, 34 schwenkbar an dem Deckel 16.

Damit der Ausstellmechanismus in der Schließstellung des Deckels lagefixiert ist, ist am führungsseitigen Ende des Hebels 34 eine sogenannte Lagefixiereinrichtung vorgesehen, die das Ende des Hebels 34 in der Hub- und Schließstellung und den gesamten Ausstellmechanismus zeitweise (d.h. in der Schließstellung des Deckels) fest positioniert.

Die Lagefixiereinrichtung umfaßt einen Kopplungszapfen 46, der über eine Blattfeder 48 mit dem führungsseitigen Ende des zweiten Hebels 34 über dessen Führungselement 36 verbunden ist. Der Kopplungszapfen 46 ist Teil eines Verriegelungsvorsprungs 49, der nach unten vorsteht und in eine Aussparung 50 in der Führungsschiene 18 in der geschlossenen Stellung des Schiebedachs einrastet (siehe Figuren 2 und 3). Der Schlitten 24 befindet sich dabei in der vorderen Stellung, und beide Hebel 30, 34 liegen relativ flach. Die Verbindungsachse 28 befindet sich an einem bezüglich Figur 3 gesehen linken Ende des Langlochs 32 und im unteren Abschnitt der Kulisse 26.

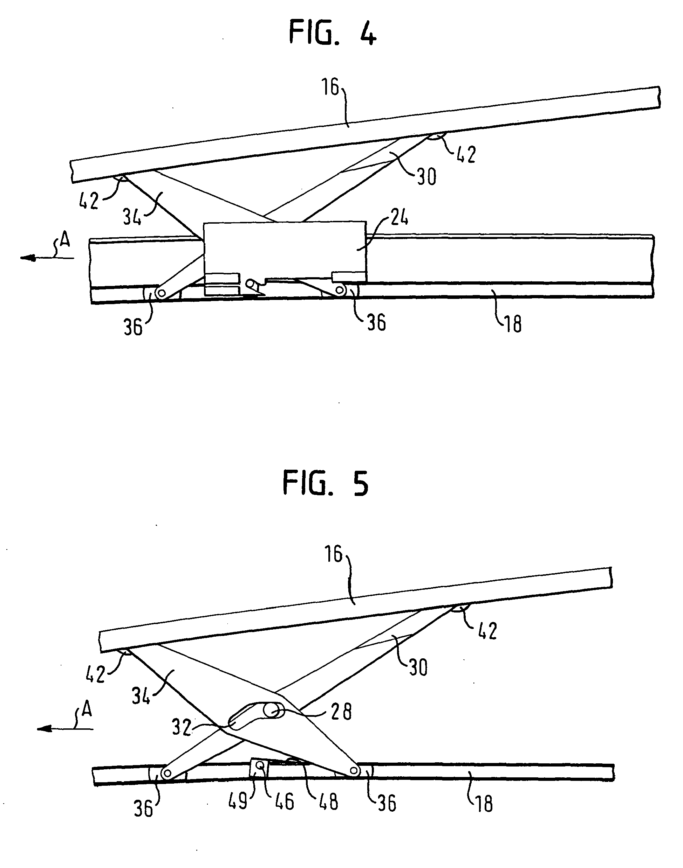

Wenn das Schiebedach ausgestellt werden soll, wird der Schlitten 24 durch das Verstellmittel nach hinten bewegt, so daß die Verbindungsachse 28 entlang des, bezogen auf Figur 8, horizontalen unteren Abschnitts der Kulisse 26 nach links wandert, bis sie in den schräg aufwärts gerichteten Abschnitt gelangt. Wenn eine weitere Verschiebung der Verbindungsachse 28 in der Kulisse 26 entlang des schräg aufwärts verlaufenden Abschnitts erfolgt, werden die Hebel 30, 34 aufgestellt (siehe Figuren 4 und 5). Die Verbindungsachse 28 wandert weiter bis zum mittleren horizontalen Abschnitt der Kulisse 26 und stellt dabei den Deckel 16 weiter aus. In der Zwischenzeit wird das führungsseitige Ende des Hebels 34 permanent in Stellung gehalten. Während der gesamten Ausstellbewegung wird über den Schlitten 24 eine Kraft unmittelbar auf die Verbindungsachse 28 ausgeübt, um diese und damit beide Hebel 30, 34 anzuheben.

Am Ende der Ausstellbewegung erreicht eine schräg aufwärts gerichtete, hakenförmige Kopplungskulisse 52 (siehe Figuren 8 und 9) am Schlitten 24 den Kopplungszapfen 26 und hebt den Verriegelungsvorsprung 49 entgegen der Kraft der Blattfeder 48 nach oben, um die Lagefixiereinrichtung auszukoppeln. Damit kann die Einheit aus Hebel 30, Hebel 34 und Schlitten 24 maximal nach hinten verfahren werden, bis zum Erreichen der komplett verfahrenen Stellung in Figur 6. Da die Einheit aus Hebel 30, 34 und Schlitten 24 in Fahrzeuglängsrichtung sehr kompakt baut, kann der Deckel 16 sehr weit nach hinten verfahren werden, und es ergibt sich eine große Öffnungsweite für die Dachöffnung 14.

Wenn die Dachöffnung 14 anschließend wieder verschlossen werden soll, wird der Schlitten 24 wieder nach vorne gefahren und nimmt dabei aufgrund der Schräge in der Kopplungskulisse 52 den Hebel 34 mit, bis schließlich die Aussparung 50 erreicht ist und der Verriegelungsvorsprung 49 aufgrund der Kraft der Blattfeder 48 wieder in die Aussparung 50 einrastet. Der Schlitten 24 fährt dann weiter, so daß die Verbindungsachse 28 in den unteren, horizontalen Abschnitt der Kulisse 26 wandert und dabei die Hebel 30, 34 nach unten geschwenkt werden, um den Deckel 16 in die Schließstellung zu bringen.

Die Stellung, in der der Verriegelungsvorsprung 49 gerade in die Aussparung 50 eingerastet ist, ist die sogenannte Lüfterstellung des Deckels 16. Beim Verfahren erreicht der Deckel 16 die Nullstellung.

### Bezugszeichenliste

- 10: Fahrzeugdach
- 12: Dachhaut
- 14: Dachöffnung
- 16: Deckel
- 18: Führungsschiene
- 19: Längsseite
- 20: Rand
- 22: Ränder
- 24: Schlitten
- 26: Kulisse
- 28: Verbindungsachse
- 30: Hebel
- 32: Langloch
- 34: Hebel
- 36: Führungselement
- 38: Abschnitt
- 42: Rippe
- 44: Stift
- 46: Kopplungszapfen
- 48: Blattfeder
- 49: Verriegelungsvorsprung
- 50: Aussparung
- 52: Kopplungskulisse

## Patentansprüche

1. Ausstellmechanismus für ein Schiebedach,
mit mindestens einer seitlichen Führungsschiene (18),
zwei Hebeln (30, 34), die ein Hebelpaar bilden, wobei jeder Hebel (30, 34) ein führungsschienenseitiges und ein deckelseitiges Ende hat und beide Hebel (30, 34) über eine Verbindungsachse (28) miteinander schwenkbar gekoppelt sind, und
einem Schlitten (24), der beim Verfahren eine vertikale Kraft auf die Verbindungsachse (28) ausübt und sie anhebt, um **dadurch** das Hebelpaar in eine Ausstellposition zu bringen.

2. Ausstellmechanismus nach Anspruch 1, **dadurch gekennzeichnet, daß** ein Bolzen die Verbindungsachse (28) bildet.

3. Ausstellmechanismus nach Anspruch 1 oder 2, **dadurch gekennzeichnet, daß** die Verbindungsachse (28) an einem ersten Hebel (30) angeordnet ist.

4. Ausstellmechanismus nach einem der vorhergehenden Ansprüche, **dadurch gekennzeichnet, daß** ein zweiter Hebel (34) ein gekrümmtes Langloch (32) aufweist, in das die Verbindungsachse (28) eingreift.

5. Ausstellmechanismus nach einem der vorhergehenden Ansprüche, **dadurch gekennzeichnet, daß** der Schlitten (24) eine Kulisse (26) hat, in die die Verbindungsachse (28) eingreift.

6. Ausstellmechanismus nach einem der vorhergehenden Ansprüche, **dadurch gekennzeichnet, daß** am führungsseitigen Ende eines Hebels (34) eine mit einem fahrzeugfesten Teil wahlweise koppelbare Lagefixiereinrichtung vorgesehen ist, die das fahrzeugseitige Ende zeitweise in ihrer Lage fixiert.

7. Ausstellmechanismus nach Anspruch 6, **dadurch gekennzeichnet, daß** ein Kopplungsmechanismus vorgesehen ist, mittels dem die Lagefixiereinrichtung vom Schlitten (24) entkoppelt oder an den Schlitten (24) angekoppelt wird, um mit dem Schlitten (24) verfahren zu werden bzw. am fahrzeugfesten Teil angreifen zu können.

8. Ausstellmechanismus nach Anspruch 7, **dadurch gekennzeichnet, daß** der Kopplungsmechanismus einen Kopplungszapfen (46) und eine Kopplungskulisse (52) hat.

9. Ausstellmechanismus nach Anspruch 8, **dadurch gekennzeichnet, daß** der Kopplungszapfen (46) einem Hebel (34) des Hebelpaares zugeordnet und die Kopplungskulisse (52) am Schlitten (24) vorgesehen ist.

10. Ausstellmechanismus nach Anspruch 8 oder 9, **dadurch gekennzeichnet, daß** der Kopplungszapfen (46) über eine Blattfeder (48) mit dem zugeordneten Hebel (34) verbunden ist.

11. Ausstellmechanismus nach einem der vorhergehenden Ansprüche, **dadurch gekennzeichnet, daß** jeder Hebel (30, 34) an seinem deckelseitigen Ende einen gabelförmigen Abschnitt hat, der an einem Deckel (16) angreift.

12. Ausstellmechanismus nach einem der vorhergehenden Ansprüche, **dadurch gekennzeichnet, daß** jeder Hebel (30, 34) an seinem führungsschienenseitigen Ende ein Führungselement (36) aufweist, wobei jedes Führungselement (36) in der Führungsschiene (18) verschiebbar ist.

13. Ausstellmechanismus nach einem der vorhergehenden Ansprüche, **dadurch gekennzeichnet, daß** das Schiebedach ein Spoilerdach ist.

14. Fahrzeugdach, mit einem Ausstellmechanismus nach einem der vorhergehenden Ansprüche, **dadurch gekennzeichnet, daß** eine Dachöffnung (14) vorgesehen ist, die ein Deckel (16) öffnen oder schließen kann und die eine Längsseite (19) hat, entlang der der Schlitten (24) beim Öffnen und Schließen der Dachöffnung (14) verfahren wird, wobei der Schlitten (24) nur zwischen quer zur Längsachse L verlaufenden Rändern (22) verfahren wird.

15. Fahrzeugdach nach Anspruch 14, **dadurch gekennzeichnet, daß** der Schlitten (24) im wesentlichen nur innerhalb der durch den umlaufenden Rand (20) begrenzten Dachöffnung (14) liegt.

16. Fahrzeugdach nach Anspruch 14 oder 15, **dadurch gekennzeichnet, daß** die Führungsschiene (18) innerhalb der durch den umlaufenden Rand (20) begrenzten Dachöffnung (14) liegt.
